# EUROPEAN PATENT APPLICATION

(11) **EP 2 194 304 A1**
(43) Date of publication of application: **09.06.2010**
(21) Application number: 08425769.0
(22) Date of filing: 02.12.2008
(51) Int. Cl.: F16L 11/08

(54) **Reinforced sheath for domestic gas pipe**

(71) Applicant: M.B.M. S.r.l., 20095 Cusano Milanino (MI) (IT)
(72) Inventor: Marusi, Giampaolo, 20095 Cusano Milanino (MI) (IT)
(74) Representative: Riccardi, Sergio

(57) **Abstract**

Reinforced sheath (10) suitable for covering corrugated gas pipes (1) used in home environments and method thereof, said sheath (10) being one piece, generally in plastic material withstanding high temperatures, with a reinforcing net buried therein.

## Description

The present invention relates to a reinforced sheath for a gas pipe, particularly a reinforced sheath for pipe for use in home environment, and to a manufacture method of said sheath.

The installation of built-in home appliances using gaseous fuel must be necessarily carried out, due to the obvious risks connected to the kind of application, assuring safety standards as high as possible. In order to achieve this result it needs to provide elements, for connecting the home appliances to the home gas pipe network, which is able to withstand stress both inside and outside the pipe and can be of different typology: mechanical, thermal and chemical stress. Among the different elements composing the plant connecting the appliances to the home gas pipe network, there are to be considered fundamental the pipes that in general are corrugated, that is they have a wall with an undulated longitudinal section. They are typically formed with stainless steel, and their geometrical shape together with the mechanical characteristics of the material they are formed with allows for achieving a noticeable level of pipe flexibility. Besides in flexibility, the disclosed geometrical shape characterizes the pipe also in the noticeable elongations reached at the application of a external mechanical strain. In order to preventing the elongation drawback, and therefore the lacking strength in terms of axial traction, pipe manufacturers are used to apply, onto outer surface of said pipe, a braided metallic net which is then fixed by different techniques, for example welding, to the attaching members, such as tang, of the corrugated pipe. Moreover the net surface is covered by a sheath formed with plastic material, serving as protection of the pipe and the net therein, against the action of chemical substances contained in the environment in which the pipe normally is used.

The main drawback, when adopting such reinforced and covering systems for gas pipes, stands in the extreme difficulties of assembly: in most cases, indeed, the cylindrical metal net (o formed with other material having high mechanical characteristics) must be necessarily put on manually on the corrugated surface of a gas pipe, given the difficulty in sliding it has due to the unevenness of the contacting surfaces. The putting on process of the cylindrical cover in plastic material is similar to the preceding case, that is it is caused to slid by strength onto the metallic net by a human operator. To these two steps there is added, then, not necessarily according to such sequence, the step for securing the metallic net to the attaching members or pipe fittings of said corrugated gas pipe, for example, by welding, and for securing of the outer plastic coat, for example by folded seam.

Main object of the present invention is, therefore, to provide a reinforced sheath suitable for home gas pipes able to be easily assembled onto the same gas pipe.

Further object of the present invention is to provide a manufacture method for said reinforced sheath suitable for home gas pipes.

Further features and advantages of the reinforced sheath suitable for home gas pipe according to the present invention will be clear by reading the following detailed description, made with reference to the annexed drawings, in which:
Fig. 1 is a longitudinal section of the reinforced sheath according to the present invention, put on a corrugated pipe, and
Fig. 2 is an enlarged view of a portion of the longitudinal section in Fig. 1.

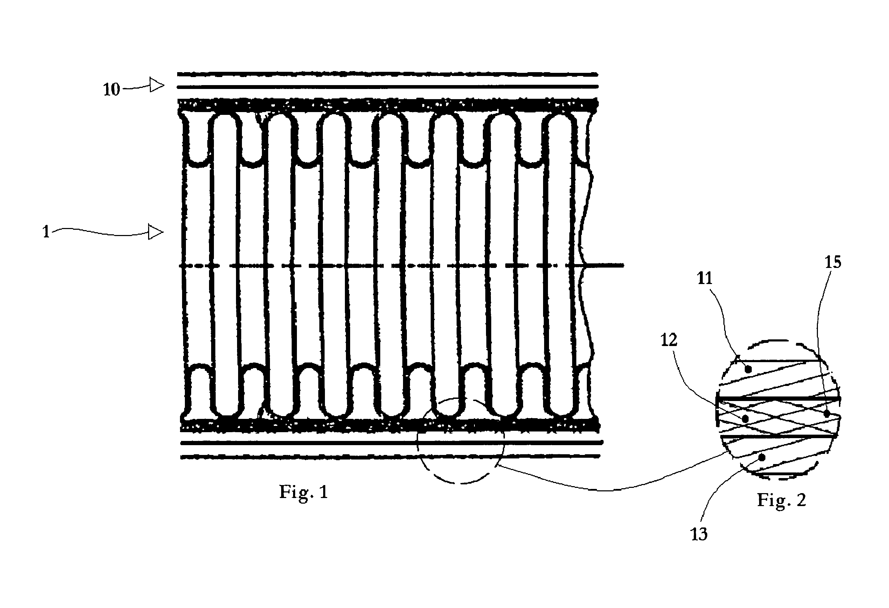

Referring now to figs. 1 and 2, there is shown a corrugated gas pipe 1 assembled with a reinforced sheath 10. Said reinforced sheath 10 is constituted by three cylindrical layers, among which the one contacting the corrugated surface of said pipe 1 is the first cylindrical layer 11 formed in plastic material, the middle one is a reinforcing cylindrical net 12 and the outer one is the covering cylindrical layer 13. The plastic material used for manufacturing the cylindrical layers 11 and 13 is selected among the ones suitable to withstand, obviously according to a given safety factor, the operating temperature provided for the gas pipe 1, and to be proof against chemical agents, typically those one provided by the standards about safety regarding those elements. The reinforce net 12, instead, is generally formed with metal or any other material which can assure a given resistance to tensile stress.

The advantage of the reinforced sheath 10 according to the present invention is given by the fact that it is manufactured, as best disclosed hereinafter, as single element and therefore wearable directly on said home gas pipe 1, eventually even in automatic manner.

The assembly process is, therefore, noticeably simplified by the fact that the corrugated surface of said gas pipe 1 is now contacting a smooth surface that is the one inside the cylindrical layer 11, and also by the fact that the presence of a rigid structure, such as the cylindrical net 12, keeps said inner smooth surface of said cylindrical layer 11 stretched between a peak and the adjacent one of the corrugated surface of said pipe 1. Both these factors, and that is the smoothness of the surface of the layer 11 and the rigidity of the net 12, decrease to the minimum the advancement resistance of the sheath 10 onto the pipe 1 thus reducing assembly times and, consequently, manufacturing costs. A further decreasing of the throughput times is due to the fact that with the sheath 10 of the present invention it no more needs to weld the reinforcing net on the gas pipe 1, since it is a body buried into the plastic material of the sheath 10, the latter securable on the gas pipe 1 by known mechanical means.

The manufacturing method according to the present invention provides for said sheath 10 the following:
Step 1 - Extrusion of the cylindrical layer 11;
Step 2 - Deployment of wires 15 constituting the net 12 on the cylindrical layer 11 just extruded;
Step 3 - Extrusion of the cylindrical layer 13 on the work in progress exiting the step 2.

The manufacturing method according to the present invention provides therefore provides that the plastic material forming the layer 11 is extruded through a cylindrical die; downstream in respect of said die there is arranged a plurality of coils on which there is wound wire which will going to constitute the net 12. The wire ends of each coil of said plurality is wound around the layer 11 exiting said die, therefore the advancement of the extruded plastic material drags said end of each coil by keeping winding it around the extruding layer 11. It is clear that the pattern of the net 12 will be defined by the number and geometrical arrangement of said plurality of coils in respect of said die: there will be thus obtained a classic net having rhomboidal pattern, with the longer diagonal of each rhombus parallel to the longitudinal axis of the cylindrical layer 11, that is in the same direction of the traction, rather than a net in which all the wires are parallel to one another and to the longitudinal axis of the cylindrical layer 11. The last configuration, in particular, is among the ones that, under the same number of wires and their section dimension, assures the best resistance to tensile stress of the pipe 1 when is provided with the reinforced sheath 10 of the present invention. Moreover, it is to be envisioned how the wires 15 used for the net embodying, formed with metal or other material having equivalent mechanical characteristics, can be in turn coated, preferably, with protective plastic material for said wires 15.

## Claims

1. A reinforced sheath (10) suitable for gas pipe (1) used in home environment, comprising:
(i) A first cylindrical layer (11) having continuous surface,
(ii) A second cylindrical layer (13) having continuous surface, coaxial in respect of said first cylindrical layer (11), and
(iii) A third cylindrical layer (12) having a reinforcing net, buried between said first cylindrical layer (11) and said second cylindrical layer (13)
**characterized by the fact that** said first cylindrical layer (11), said second cylindrical layer (13) and said reinforcing net form a single body.

2. The sheath (10) according to claim 1, wherein said first cylindrical layer (11) and said second cylindrical layer (13) are formed with plastic material withstanding high temperatures.

3. The sheath (10) according to claim 1, wherein said reinforcing net is constituted by wires (15) formed with a material having high mechanical characteristics.

4. The sheath (10) according to claim 3, wherein said material having high mechanical characteristics is Nylon^{®}.

5. The sheath (10) according to claim 3, wherein said material having high mechanical characteristics is steel.

6. The sheath (10) according to claim 3, wherein said material having high mechanical characteristics is fabric, eventually braided.

7. The sheath (10) according to claim 3, wherein said material having high mechanical characteristics is a plastic material.

8. The sheath (10) according to claim 3, wherein said wires (15) of said reinforcing net are further coated with plastic material.

9. Manufacturing method of a sheath (10) according to claim 1, comprising the steps of:
(i) Extruding said first cylindrical layer (11), preferably through a die having circular section,
(ii) Winding a plurality of wires (15), constituting said reinforcing net, onto said first cylindrical layer (11) exiting said die,
(iii) Extruding said cylindrical layer (13) on said reinforcing net just buried within said first cylindrical layer (11).

10. Manufacturing method according to claim 9, wherein said plurality of wires (15) can be arranged, around said extruding first cylindrical layer (11), so as to obtain a pattern having any geometrical shape.
